# EUROPEAN PATENT APPLICATION

(11) **EP 3 836 166 A1**
(43) Date of publication of application: **16.06.2021**
(21) Application number: 19848276.2
(22) Date of filing: 06.08.2019
(51) Int. Cl.: H01B 7/00, C09J 201/00, G02B 6/44, G02B 6/46, H01B 7/40

(54) **COMPOSITE BODY**

(30) Priority: 07.08.2018 JP 2018148790
(71) Applicant: NITTO DENKO CORPORATION, Ibaraki-shi Osaka 567-8680 (JP)
(72) Inventor: TAKASHIMA Atsushi, Ibaraki-shi, Osaka 567-8680 (JP); MIZUHARA Ginji, Ibaraki-shi, Osaka 567-8680 (JP)
(74) Representative: Gill Jennings & Every LLP
(86) International application number: PCT/JP2019/030836
(87) International publication number: WO 2020/032000

(57) **Abstract**

The present invention relates to a composite body including an elongated adhesive body and a plurality of linear members, the plurality of linear members being stuck around the adhesive body.

## Description

### TECHNICAL FIELD

The present invention relates to a composite body including an elongated adhesive body and a plurality of linear members.

### BACKGROUND ART

Various embodiments for bundling various linear members such as cables, electric wires, and optical fibers are known.

For example, Patent Literature 1 discloses a technique of bundling fibers by winding a yarn having an adhesive coating around a group of fibers in an optical fiber cable.

In addition, Patent Literature 2 discloses a technique of bundling various cords and holding the cords in a fixed position by a cord fixture having a cover band for holding the cords.

### CITATION LIST

### PATENT LITERATURE

Patent Literature 1: JP 2017-90913 A
Patent Literature 2: JP2005-237088 A

### SUMMARY OF INVENTION

### TECHNICAL PROBLEM

In the technique described in Patent Literature 1 or 2, a linear member such as an optical fiber and a cord is restrained from the outside. In such an embodiment, for example, when only one linear member is replaced due to disconnection or the like, it is necessary to release a restraint of all the linear members once to replace the linear member to be replaced, and restrain all the linear members again. Thus, the work efficiency is low.

In addition, in the technique described in Patent Literature 1 or 2, the linear member is tightened from the outside, and thus the linear member is liable to deteriorate. Further, the linear member is liable to deteriorate due to rubbing between the linear members or between the linear member and the restraint when the linear members are bent, due to the tendency of occurring the slack of the linear member.

The present invention has been made in view of the above circumstances, and an object of the present invention is to provide a composite body having less deterioration of a linear member and excellent in work efficiency when the linear member is replaced, and a production method therefor.

### SOLUTION TO PROBLEM

A composite body of the present invention to solve the problem includes an elongated adhesive body and a plurality of linear members, and the plurality of linear members are stuck around the adhesive body.

In one embodiment of the composite body of the present invention, the plurality of linear members may be stuck around the adhesive body that is as a central axis.

In one embodiment of the composite body of the present invention, all of the plurality of linear members may be stuck around the adhesive body in a state of being extended in a same direction as the adhesive body.

In one embodiment of the composite body of the present invention, the linear members may be stuck around the adhesive body without a gap in a circumferential direction of the adhesive body.

In one embodiment of the composite body of the present invention, the adhesive body may be linear.

In one embodiment of the composite body of the present invention, the adhesive body may include a linear core material and an adhesive layer that covers a surface of the core material in a longitudinal direction.

In one embodiment of the composite body of the present invention, the adhesive body may be a pressure-sensitive adhesive body.

In one embodiment of the composite body of the present invention, the plurality of linear members may include at least one selected from the group consisting of an optical fiber and an electric wire.

### ADVANTAGEOUS EFFECTS OF INVENTION

The composite body according to the present invention the deterioration of the linear member is small, and the work efficiency when replacing the linear member is also excellent.

### BRIEF DESCRIPTION OF DRAWINGS

[FIG. 1] (A) and (B) of FIG. 1 are diagrams showing a composite body according to one embodiment of the present invention. (A) of FIG. 1 is a schematic perspective view, and (B) of FIG. 1 is a schematic cross-sectional view in a cross section perpendicular to a longitudinal direction.
[FIG. 2] (A) and (B) of FIG. 2 are diagrams showing a composite body according to a modification of the embodiment of the present invention. (A) of FIG. 2 is a schematic perspective view, and (B) of FIG. 2 is a schematic cross-sectional view in the cross section perpendicular to the longitudinal direction.
[FIG. 3] FIG. 3 is a schematic perspective view showing a composite body according to a modification of the embodiment of the present invention.

### DESCRIPTION OF EMBODIMENTS

Hereinafter, an embodiment of the present invention will be described in detail. The present invention is not limited to the embodiment to be described below. In the following drawings, members/parts that perform the same action may be described with the same reference numerals, and duplicate description may be omitted or simplified. The embodiment described in the drawings is illustrated schematically for the purpose of clearly explaining the present invention, and does not necessarily accurately represent the size or scale of an actual product.

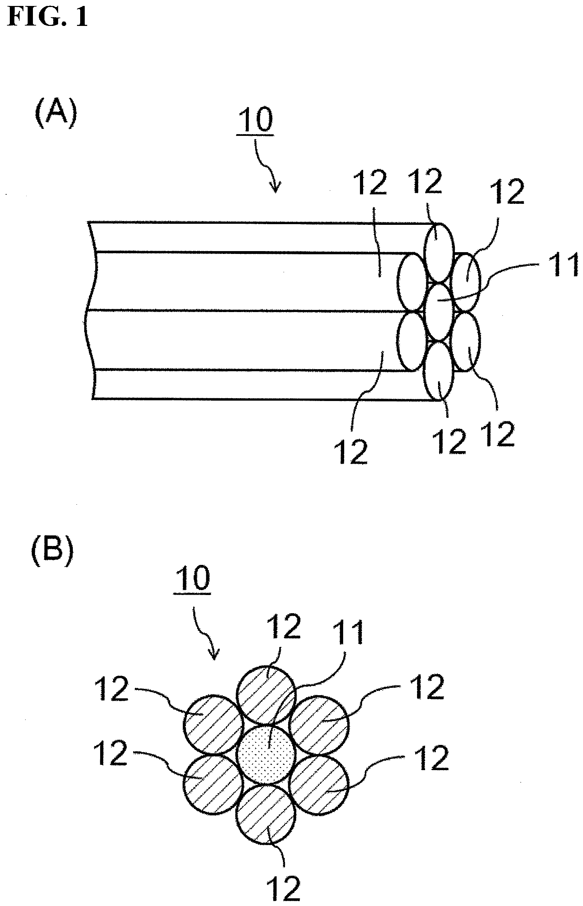

(A) and (B) of FIG. 1 are diagrams showing a composite body according to one embodiment of the present invention. (A) of FIG. 1 is a schematic perspective view, and (B) of FIG. 1 is a schematic cross-sectional view in a cross section perpendicular to a longitudinal direction.

A composite body 10 according to the present embodiment includes an elongated adhesive body 11 and a plurality of linear members 12. The plurality of linear members 12 is stuck around the adhesive body 11.

In the present description, the term "elongated" refers to a shape in which a length in a predetermined direction (longitudinal direction) is sufficiently long (for example, five times or more) with respect to the length in another direction (for example, a width direction orthogonal to the longitudinal direction).

In the present description, the term "linear" is a concept that includes not only a straight line, a curved line, a polygonal line and the like, but also a state where a material can be bent in various directions and angles like a yarn (hereinafter, also referred to as "yarn-like").

The composite body 10 according to the present embodiment is excellent in the following points because the plurality of linear members 12 are bundled without being restrained from the outside as in the related art.

First, in the composite body 10 according to the present embodiment, the plurality of linear members 12 are fixed by being stuck around the elongated adhesive body 11, and thus, one linear member can be removed without influencing the fixation of other linear members. Thus, in the composite body 10 according to the present embodiment, the linear member 12 can be easily replaced.

In addition, in the composite body 10 according to the present embodiment, the linear member 12 is not tightened from the outside, and thus, rubbing and slack are less likely to occur even when the composite body 10 is bent. Thus, the linear member 12 is less likely to deteriorate.

In the composite body 10 according to the present embodiment, the linear members 12 are preferably stuck around the adhesive body 11 that is as a central axis. This case is preferred from the viewpoint of space saving since the composite body 10 can be made thin.

In the composite body 10 according to the present embodiment, all of the linear members 12 may be stuck around the adhesive body 11 in a state of being extended in the same direction as the adhesive body 11. In this case, the linear member can be easily stuck or peeled off, and the work efficiency in producing the composite body 10 or replacing the linear member 12 is particularly excellent.

Here, a state where the linear members 12 extend in the same direction as the adhesive body 11 means a state where the linear members 12 extend substantially parallel to the adhesive body 11, and an angle formed by the linear member 12 and the adhesive body 11 is, for example, -10° to 10°.

The linear members 12 may be spirally stuck around the adhesive body 11. In this case, bending characteristics of the composite body 10 are improved.

In the composite body 10 according to the present embodiment, the linear members 12 may be stuck to the adhesive body 11 with a gap in a circumferential direction of the adhesive body 11. In this case, the adhesive body 11 is exposed in the gap portion, and the exposed adhesive body 11 can be used for fixing the composite body 10. For example, the composite body 10 can be fixed to a wall by sticking the exposed adhesive body 11 to the wall.

In addition, in the composite body 10 according to the present embodiment, the linear members 12 may be stuck to the adhesive body 11 without any gap in the circumferential direction. This case is preferred from the viewpoint of space saving since the composite body 10 can be made thin. This case is also preferred since the appearance of the adhesive body 11 is excellent because of not being exposed to the outside, and unintended objects such as dust can be prevented from adhering to the adhesive body 11.

The thickness, length, cross-sectional shape, etc. of the linear member 12 in the composite body 10 according to the present embodiment, that is, the member bundled by the adhesive body 11, is not limited as long as it is linear. Examples of the linear member 12 include an optical fiber, an electric wire, various cables and wires, an LED fiber light, a fiber, and hair. The plurality of linear members 12 in the composite body 10 according to the present embodiment may be all the same type of members or different types of members.

The number of the linear members 12 is not limited as long as it is plural, that is, 2 or more, and an appropriate number can be selected according to the type and the use of the composite body. For example, when the linear member 12 is an optical fiber, for example, about 4 to 40 linear members 12 are bundled by the elongated adhesive body 11 to form the composite body 10.

The adhesive body 11 in the present embodiment is not limited as long as it has a long shape. The shape of the cross section (hereinafter, simply referred to as "cross-sectional shape") of the adhesive body 11 perpendicular to the longitudinal direction in the present embodiment is a circle in FIG. 1, but the shape is not limited to this, and the shape may be various shapes such as an ellipse, a polygon such as a quadrangle, and the like in addition to the circle.

As described above, the shape of the adhesive body is not limited, but typically, the adhesive body preferably bundle the linear members thinly when bundling the linear members, from the viewpoint of aesthetic appearance. Thus, the composite body 10 according to the present embodiment preferably has a thin shape. From this viewpoint, the cross-sectional shape of the adhesive body 11 is preferably a shape close to a circle.

Thus, a ratio (major axis/minor axis) of the length of a major axis (the longest axis that passes through a center of gravity of the cross section) to the length of a minor axis (the shortest axis that passes through the center of gravity of the cross section) in the cross-sectional shape of the adhesive body 11 is preferably 200 or less, more preferably 100 or less, and still more preferably 50 or less. The larger ratio equates to the flatter adhesive body 11. On the other hand, the smaller ratio equates to the closer circular shape of the cross-sectional shape of the adhesive body. The ratio is 1, which is the minimum value, when the cross-sectional shape is a circle.

The thickness of the adhesive body 11 in the present embodiment is also not limited, and a thickness suitable for the number of linear members 12 to be stuck or the intended use can be selected.

In addition, the length of the adhesive body 11 in the present embodiment is also not limited, and a length suitable for the intended use can be selected.

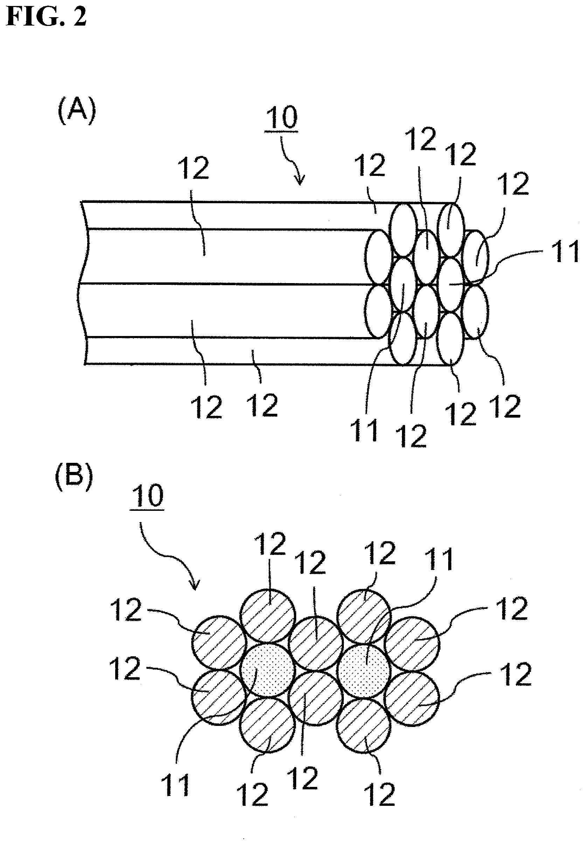

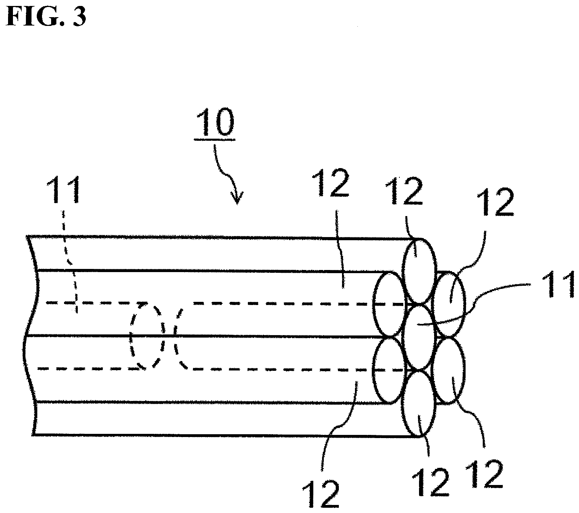

Modifications of the composite body 10 according to the present embodiment are shown in FIG. 2 and FIG. 3.

The composite body 10 may include a plurality of adhesive bodies 11 in a radial direction, as in the modification in which a schematic perspective view is shown in (A) of FIG. 2 and a schematic cross-sectional view is shown in (B) of FIG. 2. The plurality of adhesive bodies 11 in this case may be of the same type or of different types. The number of adhesive bodies 11 may be appropriately increased or decreased according to, for example, the number of linear members 12.

In addition, the composite body 10 may include a plurality of adhesive bodies 11 in the longitudinal direction as in the modification shown in a schematic perspective view in FIG. 3. The plurality of adhesive bodies 11 in this case may also be of the same type or of different types. In the modification shown in FIG. 3, the plurality of adhesive bodies 11 are disposed with a gap, but may be disposed without a gap.

The adhesive body 11 in the present embodiment may include a core material and a layer (adhesive layer) made of an adhesive that covers the core material. The adhesive body 11 may not include a core material and may be composed only of an adhesive.

The adhesive constituting the adhesive body 11 in the present embodiment is not limited, and a known adhesive can be used. Specifically, for example, an acrylic adhesive, a rubber-based adhesive, a vinyl alkyl ether-based adhesive, a silicone-based adhesive, a polyester-based adhesive, a polyamide-based adhesive, a urethane-based adhesive, a fluorine-based adhesive, and an epoxy-based adhesive can be used. Among these, a rubber-based adhesive and an acrylic adhesive are preferred, and an acrylic adhesive is particularly preferred from the viewpoint of adhesiveness. The adhesive may be used alone or in combination of two or more thereof.

The acrylic adhesive is an adhesive containing as a main agent, a polymer of monomers that contains, as a main component, a (meth)acrylic acid alkyl ester such as ethyl acrylate, butyl acrylate, 2-ethylhexyl acrylate, iso-octyl acrylate, and iso-nonyl acrylate and that is obtained by adding a modifying monomer, such as acrylonitrile, vinyl acetate, styrene, methyl methacrylate, acrylic acid, maleic anhydride, vinyl pyrrolidone, glycidyl methacrylate, dimethylaminoethyl methacrylate, hydroxyethyl acrylate, and acrylamide, if necessary.

The rubber-based adhesive is an adhesive containing, as a main component, a rubber-based polymer such as natural rubber, a styrene-isoprene-styrene block copolymer, styrene-butadiene-styrene block copolymer, a styrene-ethylene butylene-styrene block copolymer, a styrene butadiene rubber, polybutadiene, polyisoprene, polyisobutylene, butyl rubber, chloroprene rubber, and silicone rubber.

These adhesives may be appropriately blended with tackifying resins such as rosin-based one, terpene-based one, styrene-based one, aliphatic petroleum-based one, aromatic petroleum-based one, xylene-based one, phenol-based one, coumarone inden-based one, and hydrogenated one thereof, and various additives such as a cross-linking agent, a viscosity modifier (thickener), a leveling agent, a release modifier, a plasticizer, a softener, a filler, a coloring agent (pigments, dyes or the like), a surfactant, an antistatic agent, a preservative, an age resister, a UV absorber, an antioxidants, and a light stabilizer.

As the adhesive, either a solvent-type adhesive or a water-dispersible type adhesive can be used. A water-dispersible type adhesive is preferred because of being capable of being applied at high speed, being environmentally friendly, and having little influence (swelling and dissolution) on the core material due to the solvent.

The adhesive body 11 in the present embodiment is preferably a pressure-sensitive adhesive body. That is, the adhesive constituting the adhesive body 11 in the present embodiment is preferably a pressure-sensitive adhesive. The pressure-sensitive adhesive is an adhesive that has adhesiveness at room temperature and can stick an adherend to the surface thereof by the pressure generated when coming into contact with the adherend, and is an adhesive that can be peeled off and re-adhered. When a pressure-sensitive adhesive is used as the adhesive constituting the adhesive body 11, the workability when the linear members 12 are stuck to the adhesive body 11 is excellent. In addition, the linear member 12 can be peeled off and re-stuck, and thus the linear member can be replaced particularly easily. Further, for example, when a hot melt adhesive is used, heating is required in sticking the linear member 12 to the adhesive body 11, and the linear member 12 may deteriorate at this time. However, when a pressure-sensitive adhesive is used, there is no risk of such deterioration. Thus, a pressure-sensitive adhesive is preferable from this viewpoint.

When the adhesive body 11 in the present embodiment includes a core material, the material of the core material is not limited, and can be appropriately selected depending on the required properties such as strength, weight, and hardness. For example, a resin, rubber, a foam, an inorganic fiber, a composite body of these materials, and the like can be used as the material of the core material. Examples of the resin include: polyolefins such as polyethylene (PE), polypropylene (PP), ethylene/propylene copolymer, and an ethylene/vinyl acetate copolymer; polyesters such as polyethylene terephthalate (PET); a vinyl chloride resin; a vinyl acetate resin; a polyimide resin; a polyamide resin; and a fluororesin. Examples of the rubber include natural rubber, and synthetic rubber such as urethane rubber. Examples of the foam include a polyurethane foam and a foamed polychloroprene rubber. Examples of the fiber include a glass fiber, a carbon fiber, and a metal fiber. The cross-sectional shape of the core material is also not limited.

The adhesive body 11 in the present embodiment is preferably yarn-like. For example, even when the linear member 12 constituting the composite body 10 has flexibility and the composite body 10 is deformed by bending or the like, the yarn-like adhesive body 11 can deform following the deformation.

As a material of a yarn-like core material that can be used for the yarn-like adhesive body 11, various polymer materials such as rayon, cupra, acetate, promix, nylon, aramide, vinylon, vinylidene, polyvinyl chloride, polyester, acryl, polyethylene, polypropylene, polyurethane, polychlal and polylactic acid; glasses; carbon fibers; various rubbers such as natural rubber and synthetic rubber such as urethane rubber; natural materials such as cotton and wool; and metals can be used. As the form of the yarn-like core material, for example, monofilaments, multifilaments, span yarns, finished yarns typically called textured yarn, bulky yarn and stretched yarn that have been subjected to crimping or bulking, or combined yarns obtained by, for example, twisting those can be used. The cross-sectional shape is not limited to be a circular shape, and can be a short shape such as a square shape, a star shape, an elliptical shape, a hollow shape and the like.

The core material may contain various additives such as a filler (inorganic filler, organic filler or the like), an age resister, an antioxidant, a UV absorber, an antistatic agent, a lubricant, a plasticizer and, a coloring agent (pigments, dyes or the like). The conventional surface treatment such as corona discharge treatment, plasma treatment or application of a primer may be applied to the surface of the core material.

When the adhesive body 11 in the present embodiment includes a core material and an adhesive layer, the thickness of the adhesive layer is not limited and may be appropriately determined according to the type of member to be stuck and the intended use. From the viewpoint of adhesiveness, for example, the thickness of the adhesive layer is preferably 3 µm or more, and more preferably 5 µm or more. From the viewpoint of productivity, for example, the thickness of the adhesive layer is preferably 500 µm or less, and more preferably 100 µm or less.

The thickness (fineness) of the core material is not limited, and may be appropriately determined according to the type of member to be stuck and the intended use. For example, when a yarn-like core material is used, the thickness (fineness) of the core material is, for example, preferably 25 dtex or more, and more preferably 50 dtex or more from the viewpoint of strength. From the viewpoint of flexibility, the thickness (fineness) of the core material is, for example, preferably 1,500 dtex or less, and more preferably 1,000 dtex or less.

In addition, when the adhesive body 11 in the present embodiment includes a core material and an adhesive layer, the adhesive layer may cover the entire surface of the core material (the surface in the longitudinal direction), or may cover only a part of the surface of the core material. The adhesive layer is typically formed continuously, but is not limited to such a form, and may be formed in a regular pattern such as a dot shape or a stripe shape or in a random pattern. The end surface of the core material may or may not be covered with the adhesive layer. For example, when the adhesive body is cut during the production process or the use, the end surface of the core material may not be covered with the adhesive layer.

Hereinafter, an example of methods for producing the adhesive body 11 and the composite body 10 according to the present embodiment will be described, but these production methods are not limited to those exemplified below.

The adhesive body 11 composed only of an adhesive without a core material can be obtained, for example, by preparing an adhesive constituting the adhesive body 11, applying the adhesive linearly on a separator using a dispenser, and performing heating and drying if necessary.

The adhesive body 11 including a core material and an adhesive layer can be obtained, for example, by coating an adhesive composition on the surface of the core material by dipping, immersion, application, or the like, and performing heating and drying if necessary. The adhesive composition can be applied using the conventional coaters such as a gravure roll coater, a reverse roll coater, a kiss roll coater, a dip roll coater, a bar coater, a knife coater, or a spray coater.

The composite body 10 is obtained by directly sticking the plurality of linear members 12 around the adhesive body 11. At the time of sticking, for example, when the adhesive forming the adhesive body 11 is a pressure-sensitive adhesive, the linear members 12 are pressed against the adhesive body 11, and when the adhesive is a hot melt adhesive, appropriate means is adopted such as fixing the linear members 12 to the adhesive body 11 and heating.

Although the present invention has been described in detail with reference to specific examples, it is apparent to those skilled in the art that it is possible to add various alterations and modifications without departing from the spirit and the scope of the present invention. The present application is based on Japanese Patent Application (No. 2018-148790) filed on August 7, 2018, the entire contents of which are incorporated herein by reference. In addition, all references cited here are entirely incorporated.

### REFERENCE SIGNS LIST

- 10: composite body
- 11: adhesive body
- 12: linear member

## Claims

1. A composite body comprising:
an elongated adhesive body; and
a plurality of linear members,
wherein the plurality of linear members are stuck around the adhesive body.

2. The composite body according to claim 1, wherein the plurality of linear members are stuck around the adhesive body that is as a central axis.

3. The composite body according to claim 1 or 2, wherein all of the plurality of linear members are stuck around the adhesive body in a state of being extended in a same direction as the adhesive body.

4. The composite body according to any one of claims 1 to 3, wherein the linear members are stuck around the adhesive body without a gap in a circumferential direction of the adhesive body.

5. The composite body according to any one of claims 1 to 4, wherein the adhesive body is linear.

6. The composite body according to any one of claims 1 to 5, wherein the adhesive body includes a linear core material and an adhesive layer that covers a surface of the core material in a longitudinal direction.

7. The composite body according to any one of claims 1 to 6, wherein the adhesive body is a pressure-sensitive adhesive body.

8. The composite body according to any one of claims 1 to 7, wherein the plurality of linear members include at least one selected from the group consisting of an optical fiber and an electric wire.
